# EUROPEAN PATENT APPLICATION

(11) **EP 4 701 019 A1**
(43) Date of publication of application: **25.02.2026**
(21) Application number: 24811357.3
(22) Date of filing: 20.05.2024
(51) Int. Cl.: H02J 3/00, H02J 9/06, H02J 3/38, G06Q 50/06

(54) **SYSTEM AND METHOD FOR OPERATING GENERATOR**

(30) Priority: 23.05.2023 KR 20230066017
(71) Applicant: Korea Hydro & Nuclear Power Co., Ltd, Gyeongju-si, Gyeongsangbuk-do 38120 (KR)
(72) Inventor: LEE, Jae Min, Daejeon 34101 (KR)
(74) Representative: Bryn Aarflot AS
(86) International application number: PCT/KR2024/006779
(87) International publication number: WO 2024/242418

(57) **Abstract**

The present technology relates to a system and a method for operating a generator. According to an implementation of the present embodiment, local information including generator distance adjacent to each of a plurality of generators and a transmission network condition, operation information including a generator capacity and characteristics of an energy source, and time information such as maintenance period and maintenance and accident history are reflected to optimize a backup generator and construct a learning model, and an optimal backup generator is selected on the basis of the learning model with respect to an accident failure generator that is input on the basis of the constructed learning model, and thus an optimal power backup generator can be selected.

## Description

### Technical Field

The present disclosure relates to a system and method for operating a generator and, more particularly, to a technology for providing back up electric power from an optimized backup generator in the event of an arbitrary dropout generator due to an accident.

### Background Art

In a general power trading system, when an arbitrary generator drops out due to a failure due to an accident, power is backed up from another adjacent generator that is set according to the determination of power exchange staff or preset accident occurrence scenarios.

Here, a power backup generator is selected on the basis of the accident occurrence scenarios determined by taking into account a generator for which a planned preventive maintenance period has arrived, generator efficiency at the time of an accident, the unit cost of power generation, etc.

Accordingly, since the power backup generator is selected regardless of a power generation method, an energy source, and capacity of the power backup generator, there is a problem in that the grid frequency of the power backup generator is unstable.

Accordingly, the present applicant desires to propose a method of applying, for each of a plurality of generators, information including: local information including distances from adjacent generators and transmission network conditions; operation information including generator capacity and energy source characteristics; and time information including such as maintenance periods, and maintenance and accident history, so as to construct a trained model by optimizing backup generators and select an optimal backup generator based on the trained model for a generator that failed due to an accident that is input on the basis of the constructed trained model.

Meanwhile, the above-described background art is technical information that an inventor possessed for derivation of the present disclosure or obtained in a derivation process of the present disclosure, and thus, is not necessarily the known technology disclosed to the general public prior to filing the embodiment of the present disclosure.

### [Documents of Related Art]

### [Patent Documents]

(Patent Document 1) Korean Patent No. 10-2105194 (registration Date: April 21, 2020)

### Disclosure

### Technical Problem

An objective of the present disclosure for solving the technical problem is to provide a method of applying, for each of a plurality of generators, information including: local information including distances from adjacent generators and transmission network conditions; operation information including generator capacity and energy source characteristics; and time information including such as maintenance periods, and maintenance and accident history, so as to construct a trained model for optimizing backup generators and select an optimal backup generator based on the trained model for a generator that failed due to an accident that is input on the basis of the constructed trained model.

The objective of the present disclosure is not limited to the above-mentioned objective, and other objectives and strong points of the present disclosure not mentioned above may be understood by the following description, and may be more clearly understood by the exemplary embodiments of the present disclosure. In addition, it will be readily apparent that the objectives and advantages of the present disclosure may be realized by the means and combinations thereof set forth in the claims.

### Technical Solution

According to one exemplary embodiment based on one aspect of the present disclosure, there is provided a system for operating a generator, the system including:
a memory for storing computer-readable instructions; and
at least one processor implemented to execute the instructions stored in the memory,
wherein the at least one processor includes:
   a data collection unit for collecting real-time information on each of a plurality of generators interconnected by a mutually distributed communication network; and
   a trained model construction unit for constructing a trained model configured to select an optimal power backup generator matching each generator on the basis of the collected real-time information.

Preferably, the real-time information may be at least one of the following:
local information including distances from adjacent generators and transmission network conditions; operation information including generator capacity and energy source characteristics; and time information including such as maintenance periods, and maintenance and accident history.

Preferably, the at least one processor may further include:
a training unit configured to select the optimal power backup generator by being trained on input of a generator that failed on the basis of the trained model, and connect a network between the selected power backup generator and the generator that experienced an accident.

According to one exemplary embodiment based on another aspect of the present invention, there is provided a method of operating a generator, the method including:
a data collection step of collecting, by at least one processor included by the system for operating the generator,
real-time information on each of the plurality of generators interconnected through a mutually distributed network; and
a trained model construction step of constructing a trained model for selecting an optimal power backup generator on the basis of the real-time information collected from each generator.

Preferably, the real-time information may be at least one of the following:
local information including distances from adjacent generators and transmission network conditions; operation information including generator capacity and energy source characteristics; and time information including such as maintenance periods, and maintenance and accident history.

Preferably, the method may further include a training step of selecting, by the at least one processor,
the optimal power backup generator by being trained on input of a generator that failed due to an accident on the basis of the trained model, and connecting a network between the selected power backup generator and the generator that experienced the accident.

### Advantageous Effects

According to such characteristics, the embodiment of the present disclosure provides a method of applying, for each of a plurality of generators, information including: local information including distances from adjacent generators and transmission network conditions; operation information including generator capacity and energy source characteristics; and time information including such as maintenance periods, and maintenance and accident history, so as to construct a trained model by optimizing backup generators and select an optimal backup generator based on the trained model for a generator that failed due to an accident that is input on the basis of the constructed trained model.

In this manner, according to selecting an optimal power backup generator, the backup charging time for a generator that has suffered losses or failed due to an accident may be maximally reduced.

In addition, according to the present disclosure, the versatility of a system for operating a generator may be improved as an optimal power backup generator is selected on the basis of a lightweight device.

### Description of Drawings

The following drawings attached to the present specification illustrate a preferred exemplary embodiment of the present disclosure, and serve to further understand the technical spirit of the present disclosure together with the detailed description of the present disclosure to be described below, so the present disclosure should not be construed as being limited only to the matters described in the drawings.
FIG. 1 is a view illustrating generators using a distributed communication network and to which one exemplary embodiment is applied.
FIG. 2 is a configuration diagram of a system for operating a generator in FIG. 1.
FIG. 3 is a detailed configuration diagram of a processor in FIG. 2.
FIG. 4 is a view illustrating a concept of selecting an optimal backup generator according to one exemplary embodiment.
FIG. 5 is an overall flowchart illustrating a process of operating a generator of another exemplary embodiment.

### Best Mode

Hereinafter, exemplary embodiments of the present disclosure will be described in detail with reference to the accompanying drawings so that those skilled in the art may easily implement the present disclosure. However, the present disclosure is not limited to the exemplary embodiments described herein and may be embodied in many different forms. In addition, in order to clearly describe the present disclosure in the drawings, parts irrelevant to the description are omitted, and like reference numerals designate like elements throughout the specification.

Hereinafter, an exemplary embodiment will specifically describe a configuration for applying, for each of a plurality of generators, information including: local information including distances from adjacent generators and transmission network conditions; operation information including generator capacity and energy source characteristics; and time information including such as maintenance periods, and maintenance and accident history, so as to construct a trained model by optimizing backup generators and select an optimal backup generator based on the trained model for a generator that failed due to an accident that is input on the basis of the constructed trained model.

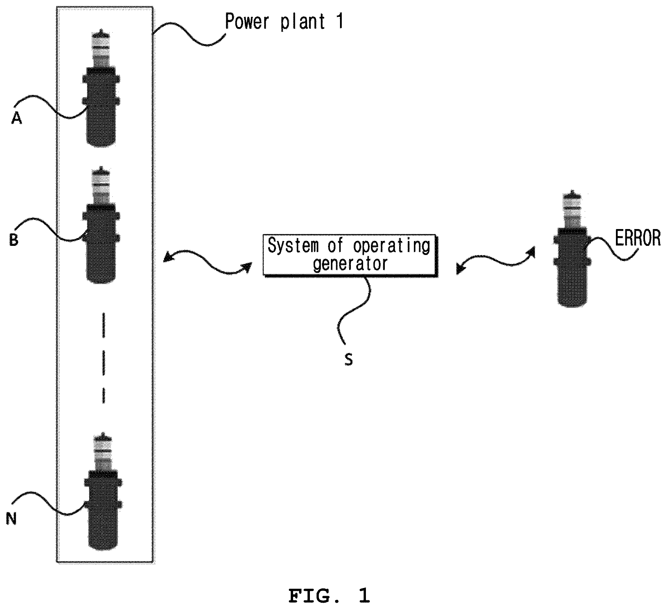

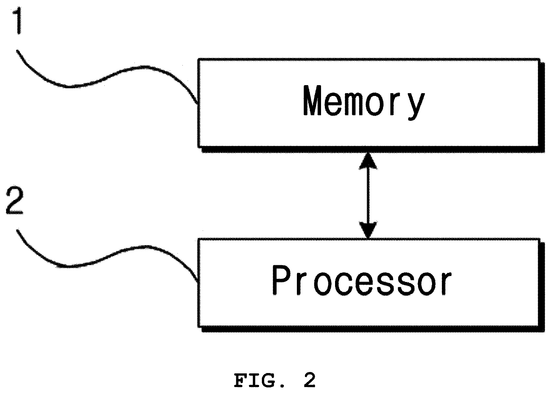

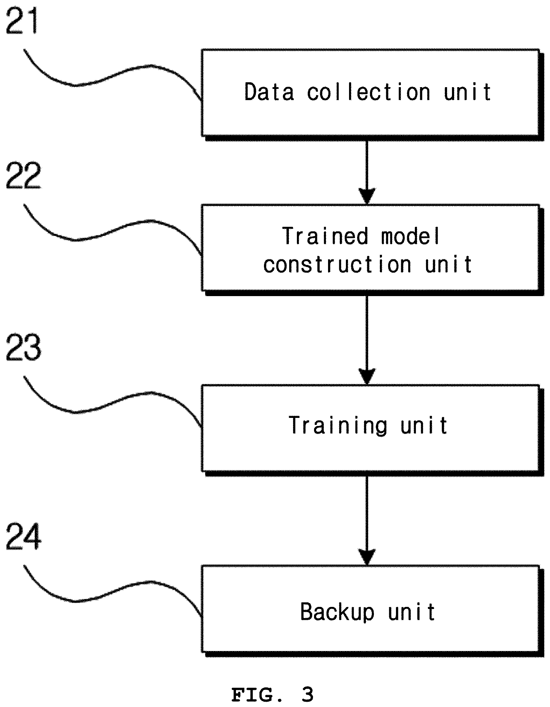

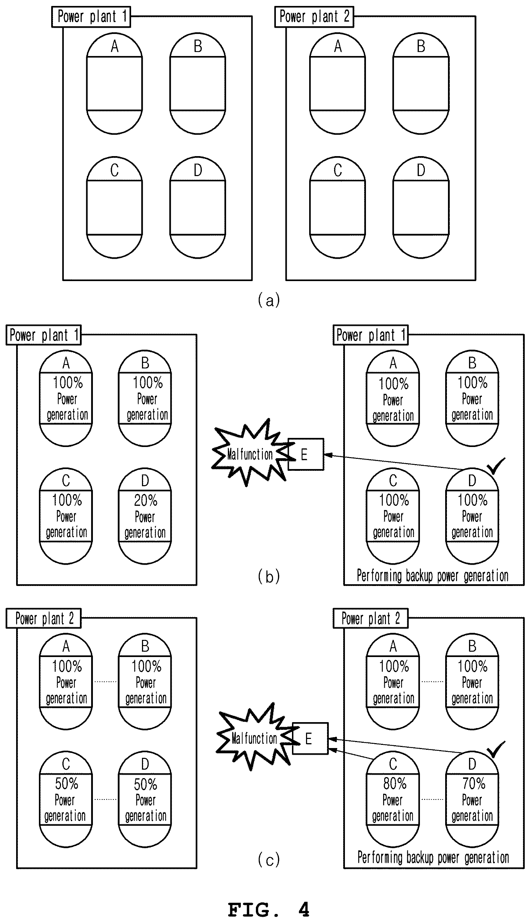

FIG. 1 is a view illustrating a structure of a distributed communication network to which one exemplary embodiment is applied, FIG. 2 is a configuration diagram illustrating a system for operating a generator in FIG. 1, FIG. 3 is a detailed configuration diagram illustrating at least one processor in FIG. 2, and FIG. 4 is an exemplary view illustrating a concept in which selecting an optimal backup generator is performed by the processor in FIG. 2. Referring to FIG. 1, the system S of operating the generator of the exemplary embodiment is trained, as input, on real-time information on generators A to N included in a plurality of power plants 1 connected to a distributed communication network, so as to select an optimal backup generator for a corresponding generator ERROR that failed.

Here, referring to FIGS. 2 and 3, the system S of operating the generator of the exemplary embodiment is provided with a memory 1 and at least one processor 2, and the at least one processor 2 may include a data collection unit 21, a trained model construction unit 22, a training unit 23, and a backup unit 24.

The data collection unit 21 is configured with a component for collecting real-time information on each of a plurality of generators interconnected through a mutually distributed communication network. Here, the real-time information may be at least one of the following: local information including distances from adjacent generators and transmission network conditions; operation information including generator capacity and energy source characteristics; and time information including such as maintenance periods, and maintenance and accident history.

That is, for each of the plurality of generators connected through the mutually distributed communication network, the data collection unit 21 collects information such as distances between generators and transmission network conditions, capacity and energy source characteristics of each generator, and maintenance periods and accident history, and then matches these kinds of information with an identifier of each generator and stores the matched results.

The trained model construction unit 22 constructs a trained model that selects an optimal power backup generator for a corresponding generator arbitrarily set by using, as input, collected real-time information between each generator.

The trained model construction unit 22 derives a value of probability of occurrence for each piece of collected real-time information through artificial intelligence (AI) based on a deep learning neural network such as convolution, and generates a weight for each piece of real-time information by using the value of probability for each derived real-time information.

Accordingly, the trained model construction unit 22 selects a power backup generator matching the corresponding generator on the basis of each piece of real-time information and each weight, and constructs a trained model in the form of a pair of labels provided for the corresponding generator that failed and the power backup generator matching thereto.

The training unit 23 is trained on the input of the generator that failed due to an accident on the basis of the trained model, selects an optimal power backup generator matching the generator that failed due to the accident, and outputs the selected power backup generator.

For example, referring to FIG. 4(a), a power plant 1 may have a plurality of generators A to D operable independently, and a power plant 2 may have generators A and B, and generators C and D, which are operable interdependently.

As an example, referring to FIG. 4(b), when it is assumed that there is a power plant 1 in which each of a plurality of generators A to C is operated at 100% of electrical energy and a generator D is operated at 20% of electrical energy, and that a corresponding generator E failed, the training unit 23 selects the generator D being operated at 100% of electrical energy as an optimal backup generator on the basis of input real-time information of the power plant 1, and provides 80% of the electrical energy of the selected optimal backup generator D to the corresponding generator E that failed. In this way, the optimal backup generator D, which has received a power supply instruction from the training unit 23, additionally generates extra 80% of electrical energy, and the 80% of the additionally generated electrical energy is transferred to the generator E that failed, thereby performing the function of power backup.

As another example, referring to FIG. 4(c), when it is assumed that there is a power plant 2 in which each of generators A and B generates interdependently 100% electrical energy of its available electrical energy and each of generators C and D is operated for power generation at 50% of electrical energy thereof, and that a corresponding generator E failed, the training unit 23 selects the generators C and D operating at 100% of electrical energy as optimal backup generators on the basis of input real-time information of the power plant 2, and causes the selected optimal backup generators C and D to additionally generate up to 80% and 70% of electrical energy respectively, so as to provide the extra electrical energy thus generated to the generator E that failed. In this way, the optimal backup generators C and D, which accordingly receive a power supply instruction from the training unit 23, additionally generate up to the 80% and 70% of electrical energy respectively, and the extra electrical energy thus generated is provided to the corresponding generator E that failed.

Meanwhile, the training unit 23 may evaluate the performance of the trained model for a training result and be trained with the trained model by applying an evaluation result of the trained model. In this case, evaluation indices of the trained model include precision, recall, and accuracy.

Here, the precision indicates a ratio of the number of the optimal power backup generators selected by the trained model to the number of actual power backup generators, the recall indicates a ratio of the number of the actual power backup generators to the number of the optimal power backup generators in the trained model, and the accuracy indicates a ratio of the number of the optimal power backup generators to the total number of predicted power backup generators.

Meanwhile, as described above, the backup unit 24 allows the generator that failed due to the accident to be supplied with the electric power received from the selected optimal power backup generator.

Accordingly, the exemplary embodiment may perform the method of applying, for each of a plurality of generators, information including: local information including distances from adjacent generators and transmission network conditions; operation information including generator capacity and energy source characteristics; and time information including such as maintenance periods, and maintenance and accident history, so as to construct a trained model by optimizing backup generators and select an optimal backup generator based on the trained model for a generator that failed due to an accident that is input on the basis of the constructed trained model.

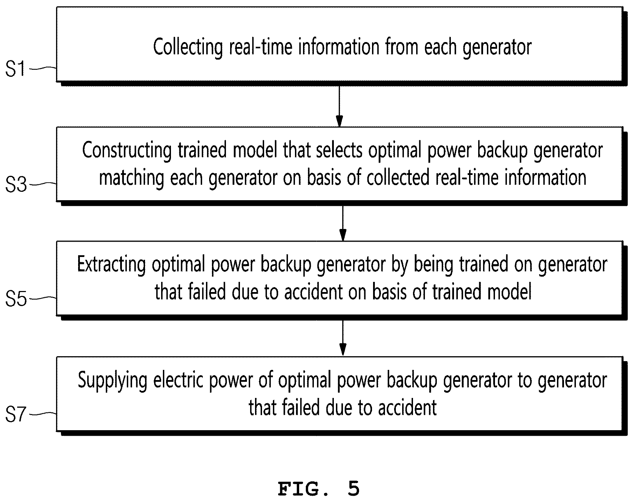

FIG. 5 is a flowchart illustrating a process of operating a generator in FIG. 2, and a method of operating a generator according to another exemplary embodiment of the present disclosure is described with reference to FIG. 5.

In a data collection step S1, for each of a plurality of generators interconnected by a mutually distributed network, at least one processor 2 of a system for operating a generator according to one exemplary embodiment collects at least one piece of real-time information including: local information including distances from adjacent generators and transmission network conditions; operation information including generator capacity and energy source characteristics; and time information including such as maintenance periods, and maintenance and accident history.

Then, the collected real-time information is provided to a trained model construction step S3.

The trained model construction step S3 constructs a trained model that selects an optimal power backup generator on the basis of the real-time information collected from each generator.

That is, the trained model selects the optimal power backup generator matching each generator on the basis of the real-time information, and is constructed in the form of a pair of labels provided for the selected optimal power backup generator and a matched generator.

In addition, based on a training step S5, the at least one processor 2 is trained on input of a generator that failed due to an accident on the basis of the trained model, and selects the optimal power backup generator. In addition, based on a backup step S7, the at least one processor 2 supplies electric power to the generator that failed due to the accident through the selected optimal power backup generator.

Accordingly, the exemplary embodiment may perform the method of applying, for each of a plurality of generators, information including: local information including distances from adjacent generators and transmission network conditions; operation information including generator capacity and energy source characteristics; and time information including such as maintenance periods, and maintenance and accident history, so as to construct a trained model by optimizing backup generators and select an optimal backup generator based on the trained model for a generator that failed due to an accident that is input on the basis of the constructed trained model, thereby selecting the optimal power backup generator.

For ease of understanding, the processor is described as being used alone, but those skilled in the art will recognize that the processing device may include a plurality of processing elements and/or a plurality of types of processing elements. For example, the processor may include a plurality of processors, or include one processor and one controller. Also, other processing configurations such as parallel processors are possible.

The software may include a computer program, a code, an instruction, or a combination of one or more thereof, and may be configured to enable the processing device to operate as desired or instruction the processing device independently or collectively.

In order to be interpreted by a control unit or to provide instructions or data to the processing device, software and/or information, signals, and data may be embodied permanently or temporarily in any type of machine, component, physical device, virtual equipment, computer storage medium or device, or transmitted signal wave.

Software may be distributed over networked computer systems, and stored or executed in a distributed manner. The software and data may be stored in one or more computer-readable recording media.

The methods according to the exemplary embodiment may be implemented in the form of program instructions that may be executed through various computer means, and may be recorded in a computer-readable media. The computer-readable medium may include program instructions, data files, data structures, and the like alone or in combination. The program instructions recorded on the media may be designed and configured specifically for the exemplary embodiments or may be publicly known and available to those skilled in the art regarding computer software.

Examples of the computer-readable recording medium include: magnetic media, such as a hard disk, a floppy disk, and a magnetic tape; optical media, such as CD-ROM and DVD; magneto-optical media such as a floptical disk; and a hardware device, such as a ROM, a RAM, and a flash memory, specially configured to store and perform program instructions.

Examples of the computer instructions include not only machine language code generated by a compiler, but also high-level language code executable by a computer using an interpreter or the like.

The hardware device described above may be configured to operate by one or more software modules to perform the operations of the exemplary embodiments, and vice versa.

As described above, although the exemplary embodiments have been described with reference to the limited exemplary embodiments and drawings, various modifications and variations are possible from the above description by those skilled in the art. For example, appropriate results may be achieved even when the described techniques are performed in a different order than that of the described method, and/or the described components of the system, structure, device, circuit, and the like are coupled to each other or combined in a different form than the described method, or rearranged or substituted by other elements or equivalents.

Therefore, the scope of the present disclosure should not be limited to the described exemplary embodiments, but should be defined not only by the claims described below but also by equivalents of the claims.

### <Description of the Reference Numerals in the Drawings>

1: memory
2: at least one processor
21: data collection unit
22: trained model construction unit
23: training unit
24: backup unit

## Claims

1. A system for operating a generator, the system comprising:
a memory for storing computer-readable instructions; and
at least one processor implemented to execute the instructions stored in the memory,
wherein the at least one processor comprises:
a data collection unit for collecting real-time information on each of a plurality of generators interconnected by a mutually distributed communication network; and
a trained model construction unit for constructing a trained model configured to select an optimal power backup generator matching each generator on the basis of the collected real-time information.

2. The system of claim 1, wherein the real-time information is at least one of the following:
local information including distances from adjacent generators and transmission network conditions;
operation information including generator capacity and energy source characteristics; and
time information including such as maintenance periods, and maintenance and accident history.

3. The system of claim 1, wherein the at least one processor further comprises:
a training unit configured to select the optimal power backup generator by being trained on input of a generator that failed on the basis of the trained model, and connect a network between the selected power backup generator and the generator that experienced an accident.

4. A method of operating a generator operated in a system for operating the generator in claim 1, the method comprising:
a data collection step of collecting, by at least one processor comprised by the system for operating the generator, real-time information on each of the plurality of generators interconnected through a mutually distributed network; and
a trained model construction step of constructing a trained model for selecting an optimal power backup generator on the basis of the real-time information collected from each generator.

5. The method of claim 4, wherein the real-time information is at least one of the following:
local information including distances from adjacent generators and transmission network conditions;
operation information including generator capacity and energy source characteristics; and
time information including such as maintenance periods, and maintenance and accident history.

6. The method of claim 4, further comprising:
a training step of selecting, by the at least one processor, the optimal power backup generator by being trained on input of a generator that failed due to an accident on the basis of the trained model, and connecting a network between the selected power backup generator and the generator that experienced the accident.

7. A computer-readable recording medium that records a program for executing, on a computer, a method of operating a generator according to any one of claims 4 to 6.

8. A program for operating a generator in a computer program combined with a computer and stored on a computer-readable recording medium for executing a method of operating the generator on the computer, the method comprising:
a data collection step of collecting real-time information on each of a plurality of generators interconnected through a mutually distributed network;
a trained model construction step of constructing a trained model for selecting an optimal power backup generator on the basis of the real-time information collected from each generator; and
a training step of being trained on input of a generator that failed on the basis of the trained model, so as to select the optimal power backup generator, connecting a network between the selected power backup generator and the generator that experienced an accident, and deriving the optimal power backup generator selected by the training.
